# EUROPÄISCHE PATENTANMELDUNG

(11) **EP 3 093 689 A1**
(43) Veröffentlichungstag der Anmeldung: **16.11.2016**
(21) Anmeldenummer: 16169169.6
(22) Anmeldetag: 11.05.2016
(51) Int. Cl.: G01S 15/93, G01S 7/539, G01S 15/46

(54) **VERFAHREN ZUM BETREIBEN EINES FAHRERASSISTENZSYSTEMS EINES KRAFTFAHRZEUGS MIT OBJEKTERKENNUNG IM NAHBEREICH, FAHRERASSISTENZSYSTEM SOWIE KRAFTFAHRZEUG**

(30) Priorität: 12.05.2015 DE 102015107389
(71) Anmelder: Valeo Schalter und Sensoren GmbH, 74321 Bietigheim-Bissingen (DE)
(72) Erfinder: FRAPSAUCE, Alice, 74321 Bietigheim-Bissingen (DE)

(57) **Zusammenfassung**

Die Erfindung betrifft ein Verfahren zum Betreiben eines Fahrerassistenzsystems eines Kraftfahrzeugs (1), bei welchem mittels eines Ultraschallsensors (4) ein Vorhandensein eines Objekts (12) in einem Bereich (9), welcher sich in einer Umgebung (7) des Kraftfahrzeugs (1) in Fahrtrichtung des Kraftfahrzeugs (1) vor und/oder hinter dem Kraftfahrzeug (1) befindet, erfasst wird und falls das Vorhandensein des Objekts (12) in dem Bereich (9) erfasst wird, ein Warnsignal ausgegeben wird, wobei das Vorhandensein des Objekts (12) mittels des Ultraschallsensors (4) in einem vorbestimmten Nahbereich (10), welcher sich in dem Bereich (9) an den Ultraschallsensor (4) anschließt, anhand eines von dem Ultraschallsensor (4) ausgesendeten und von dem Objekt (12) reflektierten Ultraschallsignal erfasst wird.

## Beschreibung

Die vorliegende Erfindung betrifft ein Verfahren zum Betreiben eines Fahrerassistenzsystems eines Kraftfahrzeugs, bei welchem mittels eines Ultraschallsensors ein Vorhandensein eines Objekts in einem Bereich, welcher sich in Fahrtrichtung des Kraftfahrzeugs vor und/oder hinter dem Kraftfahrzeug befindet, erfasst wird und falls das Vorhandensein in dem Bereich erfasst wird, ein Warnsignal ausgegeben wird. Die Erfindung betrifft außerdem ein Fahrerassistenzsystem für ein Kraftfahrzeug. Schließlich betrifft die vorliegende Erfindung ein Kraftfahrzeug mit einem derartigen Fahrerassistenzsystem.

Das Interesse richtet sich vorliegend insbesondere auf Fahrerassistenzsysteme für Kraftfahrzeuge. Derartige Fahrerassistenzsysteme können beispielsweise als sogenannte Parkhilfesysteme ausgebildet sein, die zumindest einen Ultraschallsensor umfassen. Bevorzugt weisen die Fahrerassistenzsysteme eine Mehrzahl von Ultraschallsensoren auf, die verteilt an dem Kraftfahrzeug angeordnet sind. Mit den jeweiligen Ultraschallsensoren kann ein Objekt in einem Umgebungsbereich des Kraftfahrzeugs erfasst werden. Diese Informationen können genutzt werden, um den Fahrer beim Einparken des Kraftfahrzeugs zu unterstützen. Heutige Parkhilfesysteme, die auf Ultraschalltechnologie basieren, werden in immer mehr Funktionen eingebunden, welche sich vom klassischen Einparkvorgang abheben. Neben der funktionsübergreifenden Verwendung dieser Ultraschallsensoren, ist es immer wichtiger, die Objekte in dem Umgebungsbereich des Kraftfahrzeugs genauer zu klassifizieren. Es besteht insbesondere der Wunsch, die Objekte bzw. Hindernisse bezüglich ihrer Höhe oder räumliche Ausdehnung genauer zu klassifizieren. Somit kann zuverlässiger erreicht werden, dass Kollisionen während der Fahrt sowie beim Ein- und Ausparken vermieden werden können.

Insbesondere bei Fahrerassistenzsystemen, die dazu dienen, eine Kollision mit einem Objekt zu verhindern, ist es äußerst wichtig, die Höhe eines Objekt zu ermitteln, um zu unterscheiden, ob das Fahrerassistenzsystem einen Eingriff in die Bremsanlage durchführen soll oder nicht. Hierbei soll zudem erkannt werden, ob das Objekt niedrig ist bzw. eine derart niedrige Höhe aufweist, so dass das Kraftfahrzeug über das Objekt fahren kann, ohne dass eine Beschädigung des Kraftfahrzeugs erfolgt. In diesem Fall ist beispielsweise ein Bremseingriff nicht notwendig.

Die Klassifizierung der Objekte in dem Umgebungsbereich des Kraftfahrzeugs erfolgt anhand der von dem Objekt reflektierten Ultraschallsignale bzw. Echos. Die heutigen Verfahren zur Unterscheidung eines hohen oder niedrigen Objekts basieren meistens auf der Relation zwischen zwei unmittelbar aufeinanderfolgenden Echos, welche letzten Endes ins Verhältnis gesetzt werden. Ist der zeitliche Abstand zwischen den empfangenen Echos beispielsweise gering, kann von einem hohen Objekt ausgegangen werden. Ist der zeitliche Abstand zwischen den empfangenen Echos relativ groß, kann beispielsweise davon ausgegangen werden, dass zwei Objekte, die hintereinander angeordnet sind, erfasst wurden. Wenn kein zweites Echo empfangen wird, wird in der Regel ein niedriges Objekt angenommen. Derartige Verfahren eignen sich insbesondere nur in bestimmten Situationen bzw. für bestimmte Objektabstände, welche generell einen Abstand größer als 50 Zentimeter zum Ultraschallsensor aufweisen müssen. Derartige Abstände sind bei einer herkömmlichen Parkhilfefunktion meistens ausreichend, da in diesem Nahbereich auf jede Objekthöhe gewarnt wird. Bei Funktionen zur Kollisionsvermeidung ist aber gerade die Höhe des Objekts im Nahbereich relevant, wenn beispielsweise das Kraftfahrzeug nach dem Abstellen bewegt wird und der Fahrer beim Einsteigen nicht gesehen oder geprüft hat, ob sich vor oder hinter dem Kraftfahrzeug ein Objekt befindet. Darüber hinaus verursachen sehr nahe Objekte sogenannte Mehrfachreflexionen. Hierbei wird das Ultraschallsignal bzw. mehrfach zwischen dem Ultraschallsensor und dem Objekt hin und her reflektiert. Hierdurch wird einerseits die Ausschwingzeit des Ultraschallsensors vergrößert und zum anderen wird der tatsächliche Abstand, der mit dem Ultraschallsensor bestimmt wird, verfälscht.

In diesem Zusammenhang beschreibt die DE 10 2009 046158 A1 ein Verfahren zur Erkennung von Objekten mit geringer Höhe mit einem System zur Hinderniserkennung in Fahrzeugen. Hierbei wird kontinuierlich ein Abstand zu einem Objekt mittels Abstandssensoren erfasst. Darüber hinaus wird überprüft, ob das Objekt beim Annähern an das Fahrzeug beim Unterschreiten eines vorgegebenen Abstands von den Abstandssensoren weiter erfasst wird oder aus dem Detektionsbereich der Abstandssensoren verschwindet. Schließlich wird das Objekt, das aus dem Detektionsbereich der Abstandssensoren verschwindet, als Objekt mit geringer Höhe erkannt. Somit kann der Fahrer über die Annäherung an ein Objekt mit geringer Höhe gewarnt werden.

Darüber hinaus beschreibt die EP 1 668 358 B1 ein Verfahren zum Erfassen eines projizierten Abstands zwischen einer Abstandsmesseinrichtung und einem Hindernis.

Hierbei wird ein Grenzzeitpunkt, zu dem der nächstgelegenste Punkt des Hindernisses bei einer Annäherung zwischen der Abstandsmesseinrichtung und dem Hindernis aus dem Detektionsbereich der Abstandsmesseinrichtung entschwindet, gespeichert. Darüber hinaus wird ein projizierter Grenzabstand zwischen dem nächstgelegensten Punkt des Hindernisses und der Abstandsmesseinrichtung zu dem Grenzzeitpunkt gespeichert. Anschließend wird der projizierte Abstand zwischen dem nächstgelegensten Punkt des Hindernisses und der Abstandsmesseinrichtung unter Berücksichtigung des Grenzabstandes ermittelt. Somit kann jeweils der kürzeste projizierte Abstand zwischen dem Hindernis und der Abstandsmesseinrichtung auch noch dann bestimmt werden, wenn der nächstgelegenste Punkt auf der Oberfläche des Hindernisses außerhalb des Detektionsbereichs der Abstandsmesseinrichtung liegt.

Ferner beschreibt die US 2013/0235700 A1 ein Verfahren zum Erfassen von Objekten mittels eines Ultraschallsensors im Nahbereich. Dabei wird ein Halbleiterbauelement bereitgestellt, welches eine Schaltung zum Bereitstellen eines Nahbereichsindikators in Abhängigkeit von einem von einem Ultraschallsensor empfangenen Signal aufweist. Dabei werden das empfangene Signal und ein hochfrequentes Signal zu einem Summensignal addiert. Anschließend wird das Summensignal mit einem Tiefpass gefiltert. Wenn in dem gefilterten Summensignal Anteile von einem Echo des Ultraschallsignals vorhanden sind, kann der Nahbereichsindikator ausgegeben werden.

Es ist Aufgabe der vorliegenden Erfindung, eine Lösung aufzuzeigen, wie ein Fahrerassistenzsystem der eingangs genannten Art zuverlässiger betrieben werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Weiterbildungen der Erfindung sind Gegenstand der abhängigen Patentansprüche, der Beschreibung und der Figuren.

Ein erfindungsgemäßes Verfahren dient zum Betreiben eines Fahrerassistenzsystems eines Kraftfahrzeugs. Hierbei wird mittels eines Ultraschallsensors ein Vorhandensein eines Objekts in einem Bereich, welcher sich in einer Umgebung des Kraftfahrzeugs in Fahrtrichtung des Kraftfahrzeugs vor und/oder hinter dem Kraftfahrzeug befindet, erfasst. Darüber hinaus wird, falls das Vorhandensein des Objekts in dem Bereich erfasst wird, ein Warnsignal ausgegeben. Das Vorhandensein des Objekts wird mittels des Ultraschallsensors in einem vorbestimmten Nahbereich, welcher sich in dem Bereich an den Ultraschallsensor anschließt, anhand eines von dem Ultraschallsensor ausgesendeten und von dem Objekt reflektierten Ultraschallsignals erfasst.

Das Verfahren dient insbesondere zum Unterstützen eines Fahrers beim Fahren des Kraftfahrzeugs. Das Verfahren dient bevorzugt dazu, Objekte, die sich in einem vorbestimmten Bereich in der Umgebung des Kraftfahrzeugs befinden, zu erfassen bzw. zu klassifizieren. Dabei wird das Objekt mit zumindest einem Ultraschallsensor des Fahrerassistenzsystems erfasst. Der Bereich, der auf das Vorhandensein des Objekts hin überprüft wird, kann in Vorwärtsfahrtrichtung vor dem Kraftfahrzeug oder in Vorwärtsfahrtrichtung hinter dem Kraftfahrzeug angeordnet sein. Falls ein Vorhandensein eines Objekts bzw. eines Hindernisses in diesem Bereich erkannt wird, kann mittels einer Steuereinrichtung bzw. einem Steuergerät des Fahrerassistenzsystems ein entsprechendes Warnsignal ausgegeben werden. Hierzu kann die Steuereinrichtung ein entsprechendes Signal an eine Ausgabeeinrichtung des Fahrerassistenzsystems übertragen. In Folge dessen kann beispielsweise ein optisches, akustisches und/oder haptisches Warnsignal an den Fahrer ausgegeben werden.

Vorliegend wird das Vorhandensein des Objekts mittels zumindest eines Ultraschallsensors des Fahrerassistenzsystems erfasst. Das Fahrerassistenzsystem kann auch mehrere Ultraschallsensoren aufweisen, die verteilt an dem Kraftfahrzeug angeordnet sind. Der Ultraschallsensor kann eine Membran umfassen, die mit einem entsprechenden Wandler, beispielsweise einem piezoelektrischen Element, in einer Sendephase zu mechanischen Schwingungen angeregt wird. Im Anschluss an die Sendephase schwingt die Membran des Ultraschallsensors in einer Ausschwingphase aus. Beim Ausschwingen schwingt die Membran üblicherweise in ihrer Resonanzfrequenz. Anschließend kann das von dem Objekt reflektierte Ultraschallsignal als Echo wieder empfangen werden. In einem vorbestimmten Detektionsbereich kann anhand des von dem Ultraschallsensor ausgesendeten Ultraschallsignals und dem von dem Objekt reflektierten Echo anhand der Laufzeit ein Abstand zu dem Objekt zuverlässig bestimmt werden. Dieser Detektionsbereich kann beispielsweise einen Mindestabstand von 50 Zentimeter zu dem Ultraschallsensor aufweisen.

Der Ultraschallsensor ist vorliegend nun auch dazu ausgelegt, das Vorhandensein des Objekts in einem Nahbereich zu bestimmen. Dieser Nahbereich, der auch als Blindbereich bezeichnet werden kann, schließt sich insbesondere an den Ultraschallsensor an. Ausgehend von dem Ultraschallsensor schließt sich an den Nahbereich der Detektionsbereich des Ultraschallsensors an. Der Nahbereich kann nun so vorbestimmt werden, dass das von dem Objekt reflektierte Ultraschallsignal während der Ausschwingphase wieder auf die Membran trifft. Der Nahbereich kann auch so vorbestimmt sein, dass das reflektierte Ultraschallsignal eine vorbestimmte zeitliche Dauer nach der Ausschwingphase auf die Membran des Ultraschallsensors trifft. Anhand des reflektierten Ultraschallsignals kann also auf das Vorhandensein eines Objekts in dem Nahbereich innerhalb des Bereichs rückgeschlossen werden. Eine Bestimmung des Abstands zu dem Objekt kann hierbei insbesondere nicht erfolgen. Somit kann der Ultraschallsensor dazu verwendet werden, das Vorhandensein des Objekts im Nahbereich zu bestimmen. Somit können insbesondere während der Fahrt des Kraftfahrzeugs Objekte erfasst und/oder klassifiziert werden, welche sich in dem Nahbereich, also in unmittelbarer Nähe vor oder hinter dem Kraftfahrzeug befinden.

Bevorzugt ist der Ultraschallsensor an einem Stoßfänger des Kraftfahrzeugs angeordnet und der Nahbereich wird in Abhängigkeit von einer Position und/oder von einem Einbauwinkel des Ultraschallsensors an und/oder in dem Stoßfänger und/oder in Abhängigkeit von Abmessungen des Stoßfängers vorbestimmt. Der Nahbereich kann insbesondere über eine zeitliche Dauer nach dem Aussenden des Ultraschallsignals bestimmt werden. Wenn das reflektierte Ultraschallsignal innerhalb dieser vorbestimmten zeitlichen Dauer wieder an dem Ultraschallsensor bzw. an der Membran eintrifft, kann davon ausgegangen werden, dass sich das Objekt in dem Nahbereich befindet. Der Ultraschallsensor kann beispielsweise in einer entsprechenden Öffnung des Stoßfängers oder verdeckt hinter dem Stoßfänger angeordnet sein. Dabei kann der Nahbereich, in welchem das Vorhandensein des Objekts überprüft wird, in Abhängigkeit von der Position des Ultraschallsensors an oder in dem Stoßfänger bestimmt werden. Weiterhin kann es vorgesehen sein, dass der Nahbereich in Abhängigkeit von dem Einbauwinkel des Ultraschallsensors bestimmt wird. Der Einbauwinkel beschreibt insbesondere einen Winkel zwischen einer Hauptaussenderichtung des Ultraschallsensors und einer Bezugsfläche beziehungsweise Bezugsachse des Kraftfahrzeugs. Somit kann ermittelt werden, in welche Richtung der Ultraschallsensor aussendet. Alternativ oder zusätzlich können die Abmessungen des Stoßfängers, also die räumliche Erstreckung des Stoßfängers, herangezogen werden, um den Nahbereich zu bestimmen. Der Stoßfänger ist insbesondere durch ein Verkleidungsteil, das an dem Frontbereich beziehungsweise an dem Heckbereich angeordnet ist, gebildet. Dabei kann auch die Einbauposition bzw. Einbaulage des Ultraschallsensors an oder in dem Stoßfänger berücksichtigt werden. Anhand der Einbaulage des Ultraschallsensors und der Sende- und Empfangscharakteristik des Ultraschallsensors kann dann beispielsweise auf eine Höhe des Objekts rückgeschlossen werden.

In einer Ausführungsform wird der Nahbereich derart vorbestimmt, dass sich der Nahbereich bis zu einer Unterkante des Stoßfängers, welche einer Fahrbahnoberfläche zugewandt ist, erstreckt. Die Abmessungen des Nahbereichs sind durch den Detektionsbereich des Ultraschallsensors gegeben. Der Detektionsbereich des Ultraschallsensors wird beispielsweise durch eine Verstärkung, Schwellwerte oder dergleichen bestimmt, die bei der Signalauswertung verwendet werden. Damit kann der Nahnbereich anhand des bekannten Detektionsbereichs genau bestimmt werden. Dabei können die Grenzen des Nahbereichs so bestimmt werden, dass diese ausgehend von der Einbauposition des Ultraschallsensors bis zu einer Unterkante des Stoßfängers des Kraftfahrzeugs reichen. Somit können beispielsweise Objekte zuverlässig erkannt werden, welche mit dem Stoßfänger des Kraftfahrzeugs kollidieren würden. Objekte, die eine geringere Höhe aufweisen als der Abstand der Fahrbahnoberfläche und der Unterkante des Stoßfängers, können beispielsweise nicht berücksichtigt werden. Diese können von dem Fahrzeug überfahren werden bzw. das Fahrzeug kann über diese Objekte fahren, ohne dass beispielsweise der Stoßfänger beschädigt wird. Somit kann auf zuverlässige Weise eine Kollision zwischen dem Objekt und dem Kraftfahrzeug, insbesondere dem Stoßfänger des Kraftfahrzeugs, verhindert werden. Der Nahbereich kann grundsätzlich so angepasst werden, dass sich dieser bis zu einer Unterkante des niedrigsten Teils des Kraftfahrzeugs in vorderen beziehungsweise hinteren bereich des Kraftfahrzeugs erstreckt.

Darüber hinaus ist es vorteilhaft, wenn das Vorhandensein des Objekts anhand eines Vorliegens eines Nahbereichsindikators bestimmt wird, welcher das Empfangen des reflektierten Ultraschallsignals innerhalb einer vorbestimmten zeitlichen Dauer nach dem Aussenden des Ultraschallsignals angibt. Durch die vorbestimmte zeitliche Dauer wird die vorbestimmte räumliche Erstreckung des Nahbereichs vorgegeben. Innerhalb dieser vorbestimmten zeitlichen Dauer kann überprüft werden, ob ein von dem Objekt reflektiertes Ultraschallsignals empfangen wird. Ist dies der Fall, kann davon ausgegangen werden, dass sich ein Objekt in dem Nahbereich vor oder hinter dem Kraftfahrzeug befindet. Der Nahbereichsindikator kann beispielsweise mit dem in der
US 2013/0235700 A1 beschriebenen Halbleiterbauelement realisiert werden. Dort wird der Nahbereichsindikator als Close Proximity Zone Flag (CPF) bezeichnet.

Weiterhin ist es vorteilhaft, wenn bei einem Nichtvorliegen des Nahbereichsindikators das Objekt als nicht vorhanden oder als niedriges Objekt klassifiziert wird. Dabei kann zusätzlich auch überprüft werden, ob das Objekt in einem sich an den Nahbereich anschließenden Detektionsbereich vorhanden ist. Wenn das Objekt in dem Detektionsbereich nicht erfasst bzw. nicht erkannt wird, kann ebenso das Objekt als nicht vorhanden oder als niedriges Objekt klassifiziert werden. Wenn der Nahbereichsindikator nicht vorliegt, kann davon ausgegangen werden, dass sich das Objekt nicht in dem Nahbereich befindet. Dies ist beispielsweise der Fall, wenn kein Objekt vorhanden ist. Das Nichtvorliegen des Nahbereichsindikators ist auch gegeben, wenn das Objekt unterhalb des Nahbereichs angeordnet ist und somit mit Hilfe des Nahbereichsindikators nicht ermittelt werden kann. Da der Nahbereich insbesondere derart gewählt ist, dass die Grenze des Nahbereichs bis zu der Unterkante des Stoßfängers reicht, kann davon ausgegangen werden, dass das Objekt niedriger als die Unterkante des Stoßfängers. Somit kann das Kraftfahrzeug ohne Gefahr einer Beschädigung über das Objekt hinweg bewegt werden. Die Klassifizierung des Objekts als nicht vorhanden oder als niedriges Objekt kann dem Fahrer beispielsweise mittels einer Ausgabeeinrichtung angezeigt werden. Beispielsweise kann dem Fahrer ausgegeben werden, dass ein niedriges Objekt erkannt wurde und dieses überfahren werden kann. Dies liegt beispielsweise vor, wenn das Objekt ein niedriger Bordstein ist.

In einer weiteren Ausführungsform wird bei einem Vorliegen des Nahbereichsindikators das Objekt als hohes Objekt klassifiziert. Wenn das Objekt in dem Nahbereich anhand des Nahbereichsindikators erkannt wird, ragt das Objekt in den Nahbereich hinein und ist somit üblicherweise höher als die Unterkante des Stoßfängers. In diesem Fall würde also eine Kollision zwischen dem Kraftfahrzeug und dem Objekt drohen. In diesem Fall kann eine entsprechende Warnung an den Fahrer ausgegeben werden, die ihn darauf hinweist, dass das Objekt hoch ist und somit eine Kollisionsgefahr zwischen dem Kraftfahrzeug und dem Objekt droht.

In einer weiteren Ausführungsform wird ein Warnsignal an einen Fahrer des Kraftfahrzeugs ausgegeben und/oder ein Eingriff in eine Bremsanlage des Kraftfahrzeugs durchgeführt, falls das Objekt als hohes Objekt klassifiziert wird. Wenn das Objekt als hohes Objekt erkannt wird, kann ein Warnsignal an den Fahrer ausgegeben werden. Das Warnsignal kann beispielsweise optisch, akustisch und/oder haptisch ausgegeben werden. In Folge des Warnsignals kann der Fahrer eine Bremsung durchführen, einen Gang wechseln und/oder einen Lenkeingriff durchführen, so dass eine Kollision mit dem Objekt verhindert wird. Alternativ oder zusätzlich kann mittels des Fahrerassistenzsystems ein Eingriff in die Bremsanlage des Kraftfahrzeugs durchgeführt werden, falls das Objekt als hohes Objekt klassifiziert wird. Somit kann zuverlässig eine Kollision zwischen dem Kraftfahrzeug und dem Objekt verhindert werden.

Weiterhin ist es vorteilhaft, wenn das Vorhandensein des Objekts zudem in einem sich an den Nahbereich anschließenden Detektionsbereich des Ultraschallsensors innerhalb des Bereichs erfasst wird. Der Detektionsbereich schließt sich ausgehend von dem Ultraschallsensor an den Nahbereich an. Anhand des von dem Ultraschallsensor ausgesendeten Ultraschallsignals und dem von dem Objekt reflektierten Ultraschallsignal kann überprüft werden, ob sich in dem Detektionsbereich ein Objekt bzw. Hindernis befindet. Dies eignet sich insbesondere, wenn das Kraftfahrzeug auf das Objekt zu bewegt wird. Somit kann überprüft werden, ob das in dem Detektionsbereich vorhandene Objekt in den Nahbereich eintritt oder nicht.

In einer weiteren Ausführungsform wird bei einem Vorhandensein des Objekts in dem Detektionsbereich anhand zumindest eines Echos des ausgesendeten Ultraschallsignals ein Abstand zwischen dem Kraftfahrzeug und dem Objekt bestimmt. Der Abstand zwischen dem Kraftfahrzeug bzw. dem Ultraschallsensor und dem Objekt in dem Detektionsbereich kann anhand der Laufzeit des ausgesendeten Ultraschallsignals bestimmt werden. Somit kann bestimmt werden, wie weit das Objekt von dem Kraftfahrzeug entfernt wird und ob möglicherweise eine Kollision mit dem Objekt bevorsteht.

Bevorzugt wird anhand des ermittelten Abstands und mittels Odometrie ein Eintrittszeitpunkt des Objekts in den Nahbereich bestimmt. Wenn der Abstand zwischen dem Kraftfahrzeug und dem Objekt in dem Detektionsbereich bestimmt wird, kann zusätzlich die aktuelle Fahrtrichtung und die aktuelle Fahrgeschwindigkeit des Kraftfahrzeugs bestimmt werden. Die Fahrtrichtung und die Fahrgeschwindigkeit können mittels Odometrie bestimmt werden. Hierzu können die Daten eines Lenkwinkelsensors herangezogen werden. Die Geschwindigkeit des Kraftfahrzeugs kann anhand der Umdrehungszahl zumindest eines Rades des Kraftfahrzeugs bestimmt werden. Somit kann ermittelt werden, wann das in dem Detektionsbereich detektierte Objekt in den Nahbereich eintritt. Solange das Objekt in dem Detektionsbereich erkannt wird, liegt noch keine Höheninformation bezüglich des Objekts vor. Wenn das Objekt in den Nahbereich eintritt, kann anhand des Nahbereichsindikators die Höhe des Objekts abgeschätzt werden.

Ein erfindungsgemäßes Fahrerassistenzsystem für ein Kraftfahrzeug ist zum Durchführen eines erfindungsgemäßen Verfahrens ausgelegt.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Es zeigen:
- Fig. 1: ein Kraftfahrzeug gemäß einer Ausführungsform der vorliegenden Erfindung, welches ein Fahrerassistenzsystem mit einer Mehrzahl von Ultraschallsensoren aufweist;
- Fig. 2: das Kraftfahrzeug gemäß Fig. 1 in einer Seitenansicht, wobei ein Nahbereich und ein Detektionsbereich eines Ultraschallsensors gezeigt sind;
- Fig. 3: das Kraftfahrzeug gemäß Fig. 2, wobei sich ein Objekt in dem Detektionsbereich des Ultraschallsensors befindet;
- Fig. 4: das Kraftfahrzeug gemäß Fig. 2, wobei sich ein Objekt unterhalb des Nahbereichs des Ultraschallsensors befindet; und
- Fig. 5: das Kraftfahrzeug gemäß Fig. 2, wobei sich ein Objekt in dem Nahbereich des Ultraschallsensors befindet.

In den Figuren werden gleiche und funktionsgleiche Elemente mit den gleichen Bezugszeichen versehen.

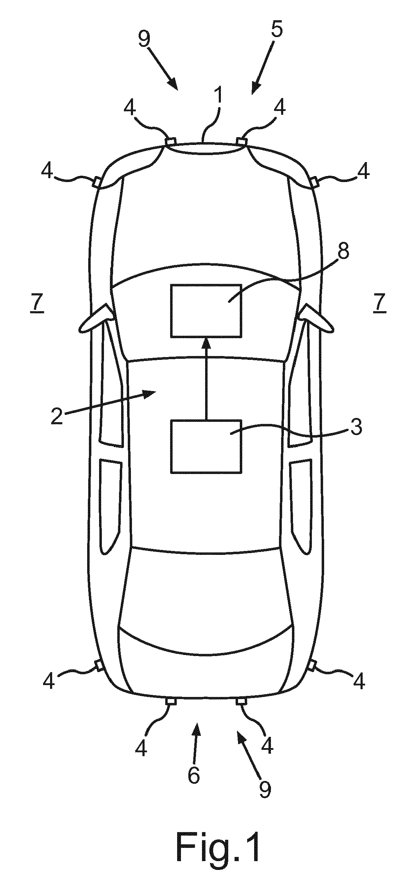

Fig. 1 zeigt ein Kraftfahrzeug 1 gemäß einer Ausführungsform der vorliegenden Erfindung. Das Kraftfahrzeug ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein elektronisches Steuergerät (ECU - Electronic Control Unit) des Kraftfahrzeugs 1 gebildet sein kann.

Darüber hinaus umfasst das Fahrerassistenzsystem 2 zumindest einen Ultraschallsensor 4. In dem vorliegenden Ausführungsbeispiel umfasst das Fahrerassistenzsystem 2 acht Ultraschallsensoren 4. Dabei sind vier Ultraschallsensoren 4 in oder an einem vorderen Stoßfänger 5 des Kraftfahrzeugs 1 und vier Ultraschallsensoren 4 in oder an einem hinteren Stoßfänger 6 des Kraftfahrzeugs 1 angeordnet. Die Ultraschallsensoren 4 sind dazu ausgebildet, ein Objekt 12 (in Fig. 1 nicht dargestellt) in einer Umgebung 7 des Kraftfahrzeugs 1 zu erfassen. Darüber hinaus können die Ultraschallsensoren 4 insbesondere dazu ausgelegt sein, einen Abstand zwischen dem Objekt 12 in der Umgebung 7 des Kraftfahrzeugs 1 zu erfassen. Vorliegend soll mit den Ultraschallsensoren 4 ein Objekt 12 in einem vorbestimmten Bereich 9, der sich in Fahrtrichtung vor und/oder hinter dem Kraftfahrzeug 1 befindet, erkannt werden. Insbesondere soll mit den Ultraschallsensoren 4 ein Objekt 12 erkannt werden, dass sich in Vorwärtsfahrtrichtung unmittelbar vor dem Kraftfahrzeug 1 befindet. Zudem soll mit den Ultraschallsensoren 4 ein Objekt 12 erkannt werden, welches sich in Vorwärtsfahrtrichtung unmittelbar hinter dem Kraftfahrzeug 1 befindet.

Darüber hinaus umfasst das Kraftfahrzeug 1 bzw. das Fahrerassistenzsystem 2 eine Ausgabeeinrichtung 8, die beispielsweise einen Bildschirm oder ein Display umfassen kann und in einem Innenraum des Kraftfahrzeugs 1 angeordnet ist. Die Steuereinrichtung 3 ist mit den Ultraschallsensoren 4 zur Datenübertragung verbunden. Entsprechende Datenleitungen sind vorliegend der Übersichtlichkeit halber nicht dargestellt. Ferner ist die Steuereinrichtung 3 mit der Ausgabeeinrichtung 8 zur Datenübertragung verbunden. Somit kann die Anzeige auf der Ausgabeeinrichtung 8 mittels der Steuereinrichtung 3 gesteuert werden. Somit kann der Fahrer beispielsweise gewarnt werden, wenn sich das Objekt 12 in einem der Bereiche 9 befindet und somit eine Kollision zwischen dem Objekt 12 und dem Kraftfahrzeug 1 droht. Alternativ oder zusätzlich zu der optischen Ausgabe kann mit der Ausgabeeinrichtung 8 auch ein akustisches und/oder ein haptisches Warnsignal ausgegeben werden.

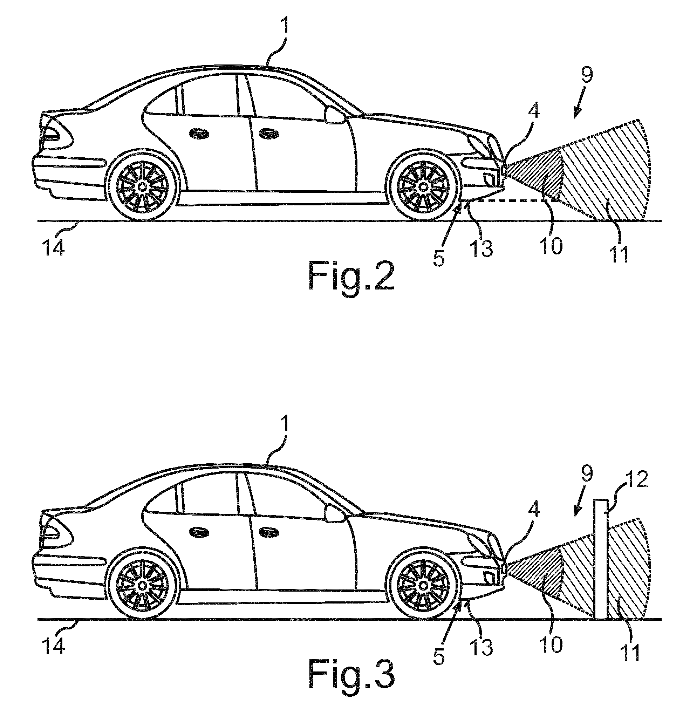

Fig. 2 zeigt das Kraftfahrzeug 1 gemäß Fig. 1 in einer Seitenansicht. Vorliegend ist beispielhaft ein Detektionsbereich 11 eines der vorderen Ultraschallsensoren 4 gezeigt, der sich mit dem Bereich 9 vor dem Kraftfahrzeug 1 zumindest teilweise überlagert. In dem Detektionsbereich 11 kann anhand der Laufzeit des mit dem Ultraschallsensor 4 ausgesendeten Ultraschallsignals ein Abstand zwischen dem Ultraschallsensor 4 und dem Objekt 12 bestimmt werden. Darüber hinaus ist dem Ultraschallsensor 4 ein vorbestimmter Nahbereich 10 zugeordnet. In dem Nahbereich 10 kann das Vorhandensein des Objekts 12 anhand des reflektierten Ultraschallsignals erfasst werden. In dem Nahbereich 10 kann das Objekt 12 erfasst werden, selbst wenn das herkömmliche Echolotverfahren bezüglich des Ultraschallsignals keine Abstandsinformation mehr liefern kann. In dem Nahbereich 10 kann es beispielsweise der Fall sein, dass ein Objekt 12 so nahe an dem Ultraschallsensor 4 angeordnet ist, dass das reflektierte Echo während einer Ausschwingphase des Ultraschallsensors 4, die auf die Sendephase folgt, empfangen wird. Der Nahbereich 10 wird durch eine vorbestimmte zeitliche Dauer definiert, in welcher nach dem Aussenden des Ultraschallsignals reflektierte Signale empfangen werden.

Der Nahbereich 10 ist vorliegend durch eine Einbauposition und/oder durch einen Einbauwinkel des Ultraschallsensors 4 definiert. Vorliegend ist der Nahbereich 10 derart bestimmt, dass der Nahbereich 10 an eine Unterkante 13 des Stoßfängers 5 des Kraftfahrzeugs 1 grenzt. Zum Überprüfen des Vorhandenseins des Objekts 12 in dem Nahbereich 10 kann ein sogenannter Nahbereichsindikator herangezogen werden. Hierbei kann beispielsweise überprüft werden, ob innerhalb einer vorbestimmten zeitlichen Dauer nach dem Aussenden des Ultraschallsignals mit dem Ultraschallsensor 4 das von dem Objekt 12 reflektierte Ultraschallsignal empfangen wird. Wird innerhalb der vorbestimmten zeitlichen Dauer das reflektierte Ultraschallsignal empfangen, wird der Nahbereichsindikator ausgegeben.

In dem Ausführungsbeispiel von Fig. 2 ist der Übersichtlichkeit halber nur der Nahbereich 10 und der an den Nahbereich 10 angrenzende Detektionsbereich 11 eines einzelnen Ultraschallsensors 4 dargestellt. In dem vorliegenden Beispiel befindet sich kein Objekt 12 in dem Nahbereich 10 oder in dem Detektionsbereich 11 des Ultraschallsensors 4. Somit kann das Kraftfahrzeug 1 beispielsweise in Vorwärtsfahrtrichtung bewegt werden, ohne dass eine Kollision mit dem Objekt 12 droht.

Fig. 3 zeigt das Kraftfahrzeug 1 gemäß Fig. 2, wobei sich ein Objekt 12 in dem Detektionsbereich 11 des Ultraschallsensors 4 befindet. In diesem Detektionsbereich 11 kann der Abstand zwischen dem Objekt 12 und dem Ultraschallsensor 4 bzw. dem Kraftfahrzeug 1 bestimmt werden. In diesem Fall kann beispielsweise mittels der Ausgabeeinrichtung 8 ein Warnsignal an den Fahrer ausgegeben werden, welches ihn auf das Vorhandensein des Objekts 12 hinweist. Ferner kann es vorgesehen sein, dass mittels des Fahrerassistenzsystems 2 ein Bremseingriff durchgeführt wird, um eine Kollision mit dem Hindernis 12 zu vermeiden.

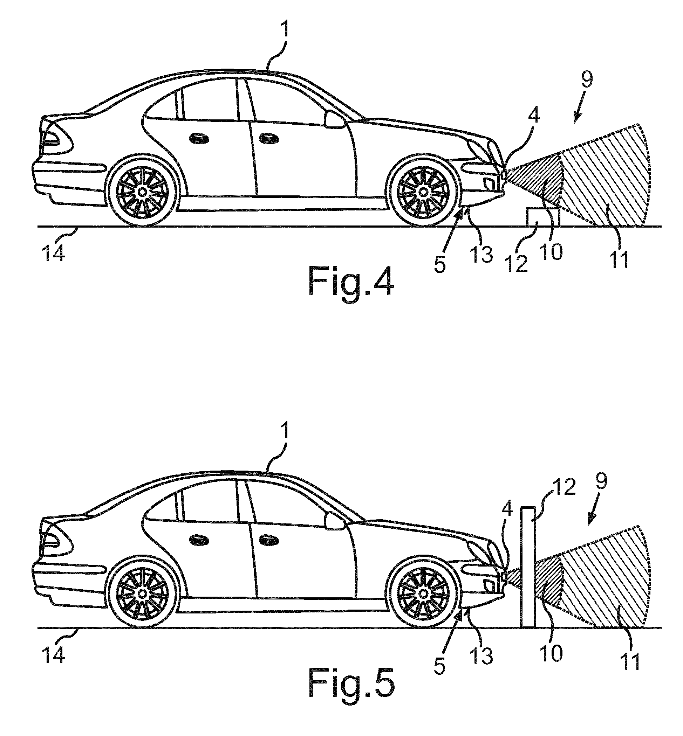

Fig. 4 zeigt das Kraftfahrzeug 1 gemäß Fig. 2, bei welchem sich das Objekt 12 unterhalb des Nahbereichs 10 befindet. Das Objekt 12 weist also eine Höhe auf, die geringer ist als der Abstand zwischen einer Fahrbahnoberfläche 14 und der Unterkante 13 des Stoßfängers 5. In diesem Fall wird in dem Detektionsbereich 11 kein Objekt 12 erfasst. Zudem wird in dem Nahbereich 10 kein Objekt 12 erfasst, da der Bereich der Nahbereichserkennung bis zu der Unterkante 13 des Stoßfängers des Kraftfahrzeugs 1 reicht. Hier kann davon ausgegangen werden, dass das Objekt 12 mit dem Kraftfahrzeug 1 überfahren werden kann. Das Objekt 12 kann also als niedrig klassifiziert werden. Hierbei kann ebenfalls eine entsprechende Ausgabe mittels der Ausgabeeinrichtung 8 erfolgen, die den Fahrer darauf hinweist, dass das Objekt 12 als niedrig klassifiziert wird.

Fig. 5 zeigt das Kraftfahrzeug 1 gemäß Fig. 2, bei dem sich das Objekt 12 in dem Nahbereich 10 befindet. Hier zeigt der Nahbereichsindikator das Objekt 12 in dem Nahbereich 10 an. Damit kann davon ausgegangen werden, dass sich ein hohes Objekt 12 unmittelbar vor dem Kraftfahrzeug 1 befindet. Wenn nun anhand des ausgesendeten und des von dem Objekt 12 reflektierten Ultraschallsignals keine Abstandsinformation vorhanden ist, folgt daraus, dass das Objekt 12 entweder sehr nahe an dem Kraftfahrzeug 1 ist oder das Objekt höher als die Unterkante 13 des Stoßfängers 5 ist. In diesem Fall kann ein Eingriff in die Bremsanlage mittels des Fahrerassistenzsystems 2 erfolgen.

Das Fahrerassistenzsystem 2 kann vorteilhaft bei einem Heranfahren des Kraftfahrzeugs 1 an das Objekt 12 verwendet werden. Wenn zunächst das Objekt 12 in dem Detektionsbereich 11 erkannt wird, liegt zunächst noch keine Höheninformation bezüglich des Objekts 12 vor. Bei der Annäherung des Kraftfahrzeugs 1 an das Objekt 12 lässt sich anhand der Laufzeit des Ultraschallsignals ein Abstand zwischen dem Kraftfahrzeug 1 und dem Objekt 12 ermitteln. Zudem kann die aktuelle Fahrtrichtung und die aktuelle Fahrgeschwindigkeit des Kraftfahrzeugs 1 mittels der Steuereinrichtung 3 anhand von Odometriedaten bestimmt werden. Auf diese Weise kann ein Eintrittszeitpunkt des Objekts 12 in den Nahbereich 10 ermittelt werden. In dem Nahbereich kann dann die Höhe des Objekts 12 unter Zuhilfenahme des Nahbereichsindikators bestimmt werden. Hierbei kann das Objekt 12 entweder als niedrig oder als hoch klassifiziert werden.

## Patentansprüche

1. Verfahren zum Betreiben eines Fahrerassistenzsystems eines Kraftfahrzeugs (1), bei welchem mittels eines Ultraschallsensors (4) ein Vorhandensein eines Objekts (12) in einem Bereich (9), welcher sich in einer Umgebung (7) des Kraftfahrzeugs (1) in Fahrtrichtung des Kraftfahrzeugs (1) vor und/oder hinter dem Kraftfahrzeug (1) befindet, erfasst wird und falls das Vorhandensein des Objekts (12) in dem Bereich (9) erfasst wird, ein Warnsignal ausgegeben wird,
**dadurch gekennzeichnet, dass**
das Vorhandensein des Objekts (12) mittels des Ultraschallsensors (4) in einem vorbestimmten Nahbereich (10), welcher sich in dem Bereich (9) an den Ultraschallsensor (4) anschließt, anhand eines von dem Ultraschallsensor (4) ausgesendeten und von dem Objekt (12) reflektierten Ultraschallsignal erfasst wird.

2. Verfahren nach Anspruch 1
**dadurch gekennzeichnet, dass**
der Ultraschallsensor (4) an einem Stoßfänger (5, 6) des Kraftfahrzeugs (1) angeordnet ist und der Nahbereich (10) in Abhängigkeit von einer Position und/oder einem Einbauwinkel des Ultraschallsensors (4) an und/oder in dem Stoßfänger (5, 6) und/oder in Abhängigkeit von Abmessungen des Stoßfängers (5, 6) vorbestimmt wird.

3. Verfahren nach Anspruch 2
**dadurch gekennzeichnet, dass**
der Nahbereich (10) derart vorbestimmt wird, dass sich der Nahbereich (10) bis zu einer Unterkante (13) des Stoßfängers (5, 6), welche einer Fahrbahnoberfläche (14) zugewandt ist, erstreckt.

4. Verfahren nach einem der vorhergehenden Ansprüche,
**dadurch gekennzeichnet, dass**
das Vorhandenseins des Objekts (12) anhand eines Vorliegens eines Nahbereichsindikators bestimmt wird, welcher das Empfangen des reflektierten Ultraschallsignals innerhalb einer vorbestimmten zeitlichen Dauer nach dem Aussenden des Ultraschallsignals angibt.

5. Verfahren nach Anspruch 4,
**dadurch gekennzeichnet, dass**
bei einem Nichtvorliegen des Nahbereichsindikators das Objekt (12) als nicht vorhanden oder als niedriges Objekt klassifiziert wird.

6. Verfahren nach Anspruch 4 oder 5,
**dadurch gekennzeichnet, dass**
bei einem Vorliegen des Nahbereichsindikators das Objekt (12) als hohes Objekt klassifiziert wird.

7. Verfahren nach Anspruch 6,
**dadurch gekennzeichnet, dass**
ein Warnsignal an einen Fahrer des Kraftfahrzeugs (1) ausgegeben wird und/oder ein Eingriff in eine Bremsanlage des Kraftfahrzeugs (1) durchgeführt wird, falls das Objekt (12) als hohes Objekt klassifiziert wird.

8. Verfahren nach einem der vorhergehenden Ansprüche,
**dadurch gekennzeichnet, dass**
das Vorhandensein des Objekts (12) zudem in einem sich an den Nahbereich (10) anschließenden Detektionsbereich (11) des Ultraschallsensors (4) innerhalb des Bereichs (9) erfasst wird.

9. Verfahren nach Anspruch 8,
**dadurch gekennzeichnet, dass**
bei einem Vorhandensein des Objekts (12) in dem Detektionsbereich (11) anhand zumindest eines Echos des ausgesendeten Ultraschallsignals ein Abstand zwischen dem Kraftfahrzeug (1) und dem Objekt (12) bestimmt wird.

10. Verfahren nach Anspruch 9,
**dadurch gekennzeichnet, dass**
anhand des bestimmten Abstands und mittels Odometrie ein Eintrittszeitpunkt des Objekts (12) in den Nahbereich (10) bestimmt wird.

11. Fahrerassistenzsystem (2) für ein Kraftfahrzeug (1), welches zum Durchführen eines Verfahrens nach einem der vorhergehenden Ansprüche ausgelegt ist.

12. Kraftfahrzeug (1) mit einem Fahrerassistenzsystem (2) nach Anspruch 11.
